(19) **Europäisches Patentamt / European Patent Office / Office européen des brevets**

(11) **EP 3 109 662 B1**

(12) **EUROPEAN PATENT SPECIFICATION**

(45) Date of publication and mention
of the grant of the patent:
**13.09.2017 Bulletin 2017/37**

(51) Int Cl.:
*G01S 7/288* (2006.01)     *G01S 7/292* (2006.01)
*G01S 13/26* (2006.01)     *G01S 13/524* (2006.01)
*G01S 13/58* (2006.01)     *G01S 13/93* (2006.01)
*G01S 13/34* (2006.01)     *G01S 7/35* (2006.01)

(21) Application number: **16175796.8**

(22) Date of filing: **22.06.2016**

(54) **RADAR SIGNAL PROCESSING FOR AUTOMATED VEHICLES**

RADARSIGNALVERARBEITUNG FÜR AUTOMATISIERTE FAHRZEUGE

TRAITEMENT DE SIGNAUX RADAR POUR DES VÉHICULES AUTOMATISÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.06.2015 US 201514751601**

(43) Date of publication of application:
**28.12.2016 Bulletin 2016/52**

(73) Proprietor: **Delphi Technologies, Inc.
Troy, MI 48007 (US)**

(72) Inventor: **Arage, Alebel Hassen
Carmel, lindiana 46032 (US)**

(74) Representative: **Delphi France SAS
Patent Department
22, avenue des Nations
CS 65059 Villepinte
95972 Roissy CDG Cedex (FR)**

(56) References cited:
**US-B2- 7 639 171**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 109 662 B1

**Description**

**TECHNICAL FIELD OF INVENTION**

This disclosure generally relates to a radar system suitable for use on an automated vehicle, and more particularly relates to a signal processing technique that processes data from a prior radar pulse reflection while simultaneously capturing data from a subsequent radar pulse reflection.

**BACKGROUND OF INVENTION**

Radar sensors are widely used in vehicular sensor systems as source of information to control autonomous driving systems for automated vehicles. Systems include active safety features such as Intelligent Cruise Control, Collision Warning and Mitigation, and surrounding detection systems. A transmitted radar-signal propagates to an object in the radar field-of-view, and the reflected-signal received by the system is converted to a discreet base band signal during its propagation through signal conditioning devices chain. For a series of waveform pulses, the base band signal is transferred from time to Range-Doppler frequency domain in the digital signal processing (DSP) device, where the Range or Range-Doppler spectrums from all of the receive antenna-array elements are integrated non-coherently.

Typically, automotive radars use this non-coherently integrated (NCI) spectral profile as the base for object detection schema or NCI-detection schema. These known systems evaluate the amplitude of the NCI-spectrums for position and Doppler parameter estimation of detected objects those possess higher spectral amplitude than an estimated detection threshold. This amplitude NCI-detection technique suppresses system noise variance, and keeps noise caused false alarm rates to a minimum. In an ideal system (i.e. minimal coupling between antenna-array elements), it results in a net signal-to-noise gain as the system noise is less correlated across antenna-array elements comparing to the reflected-signal from the object. Objects recognized by this detection will be then subject for tracking. The tracker applies various tracking algorithms to evaluate and weight time dependent quantitative behaviors of detected object parameters and make a reliable decision on object recognition and classification.

United States Patent 7,639,171 issued to Alland et al. on December 29, 2009 and titled RADAR SYSTEM AND METHOD OF DIGITAL BEAM FORMING describes a system that has a significant amount of process idle time while accumulating Range frequency spectrum data from the time domain A/D-sample data for all successive chirps (or pulses) of a measurement cycle. Then the system proceeds to post-process Doppler frequency transformation (i.e. Doppler-FFT) and amplitude NCI across receive antenna-array elements on a large amount of range spectrum data stored in the radar memory. The NCI-spectrums are used to perform Range-Doppler (RD) detections and proceeds with detection parameters estimation including the computation of angular position. The time required for these post processes is relatively high while losing processing time during sample data collection and range frequency transformation (Range-FFT). That is, the prior system has an undesirably inefficient signal processing or undesirably slow measurement update rate.

**SUMMARY OF THE INVENTION**

In accordance with one embodiment, a radar system is provided. The system includes a transmitter, a plurality of antennas, and a controller. The transmitter is operable to transmit a radar-signal characterized by a series of pulses. The radar-signal includes a first pulse and a second pulse. The plurality of antennas is operable to detect a reflected-signal indicative of a reflection of the radar-signal by an object. The plurality of antennas includes a first antenna operable to output a first signal and a second antenna operable to output a second signal. The controller is operable to receive the first signal and the second signal during reception of the reflection of the first pulse. The controller is also operable to calculate, before reception of the reflection of the second pulse is finished, a first transformation of the first signal and the second signal to determine range-data based on the reflection of the first pulse. The range-data includes a phase-component and an amplitude-component. The first transformation is followed by calculate a complex non-coherent integration of the phase-component and the amplitude-component to determine averaged-range-data that includes a Doppler-phase and a Doppler-amplitude.

In another embodiment, the controller is further operable to normalize the phase-component prior to calculating the complex non-coherent integration of the phase-component and the amplitude-component.

In yet another embodiment, the controller is further operable to calculate, after the series of pulses is transmitted, a first-stage-Doppler-FFT, followed by a range-Doppler-detection, followed by a second-stage-Doppler-FFT.

Further features and advantages will appear more clearly on a reading of the following detailed description of the preferred embodiment, which is given by way of non-limiting example only and with reference to the accompanying drawings.

## BRIEF DESCRIPTION OF DRAWINGS

The present invention will now be described, by way of example with reference to the accompanying drawings, in which:

Fig. 1 is a schematic diagram of a system in accordance with one embodiment;
Fig. 2 is a timing diagram for a prior system in accordance with one embodiment;
Fig. 3 is a timing diagram for the system of Fig. 1 in accordance with one embodiment; and
Fig. 4 is flowchart of a method executed by the system of Fig. 1 in accordance with one embodiment.

## DETAILED DESCRIPTION

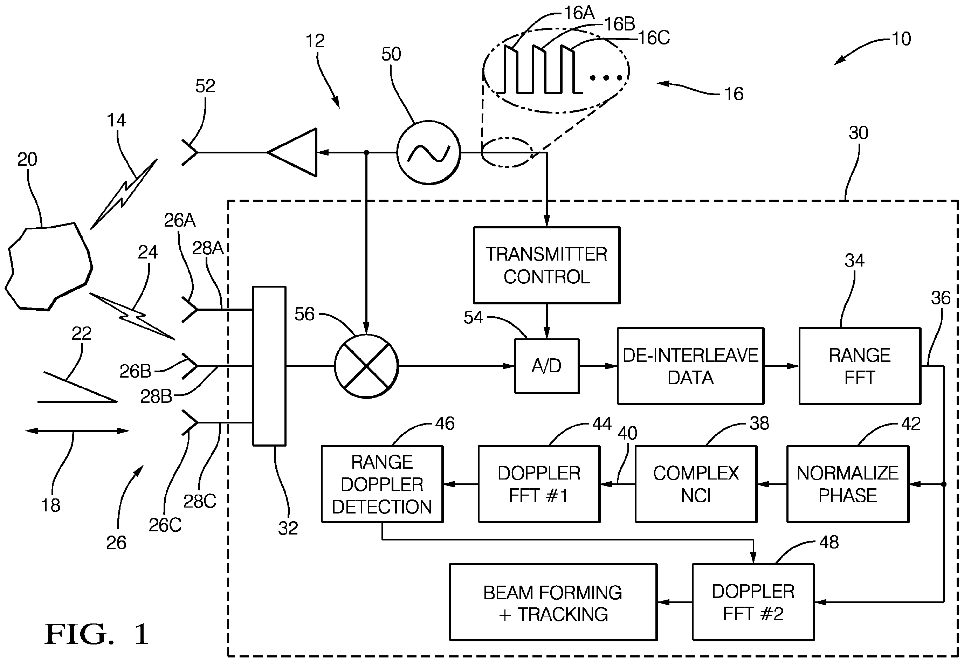

Fig. 1 illustrates a non-limiting example of a radar system 10, hereafter referred to as the system 10. While the system 10 described herein was developed with automotive applications such as autonomous vehicles, or fully or partially automated vehicles in mind, it is contemplated that teachings presented herein will be useful for non-automotive applications. The system 10 includes a transmitter 12 operable to transmit a radar-signal 14 characterized by a series of pulses 16. The radar-signal includes a first pulse 16A and a second pulse 16B. It is contemplated that each pulse will cause the radar-signal 14 to sweep or vary over a range of frequencies as suggested by the shape of each pulse; however this is not a requirement as a fixed frequency signal may be used. By way of example and not limitation, the system 10 may linearly frequency sweep the radar signal 14 from seventy-six gigahertz (76GHz) to seventy-seven gigahertz (77.00 GHz) in fifty microseconds (50 us). The system 10 may be configured to transmit a series of xx-pulses (16A, 16B, 16C,....16xx), for example sixty-four pulses, that are processed as described in more detail below to determine, for example, a range 18 to an object 20, a rate of change of the range 18, a direction or angle 22 to the object 20, and/or a classification (e.g. large/small, moving/stationary) of the object 20 based on estimated object parameters and various characteristics of a reflected-signal 24.

The system 10 may include a plurality of antennas 26 to detect the reflected-signal 24 indicative of a reflection of the radar-signal 14 by the object 20. While this non-limiting example shows three antennas, this is only to simplify the illustration as configurations with greater than and less than three receive antennas and greater than the one transmit antenna are contemplated. Additional information regarding multiple antenna radar systems and the operation thereof that may be relevant to the system 10 described herein can be found in United States Patent 7,474,262 issued to Alland on January 6, 2009, and United States Patent 7,639,171 issued to Alland et al. on December 29, 2009 The plurality of antennas 26 in this example includes a first antenna 26A operable to output a first signal 28A and a second antenna 26B operable to output a second signal 28B.

The system 10 may include a controller 30 operable to receive the first signal 28A and the second signal 28B during reception of the reflection of the series of pulses 16 including the first pulse 16A. The controller 30 may include and a switch matrix 32 configured to time-multiplex the signals output by the plurality of antennas 26. The switch matrix 32 may operate to select only one antenna from the plurality of antennas 26, or may combine signals from two or more of the plurality of antennas 26 to form a variety of subarrays as will be recognized by those in the art. It is also contemplated that each of the plurality of antennas 26 may be connected to an equivalent plurality of dedicated receivers so the switch matrix 32 is not necessary. Furthermore, while the transmit antenna and the plurality of receive antennas 26 are shown as distinct parts, this is only to simplify the illustration, and it is recognized that the same antenna elements could be used to transmit the radar-signal 14 and detect the reflected-signal 24.

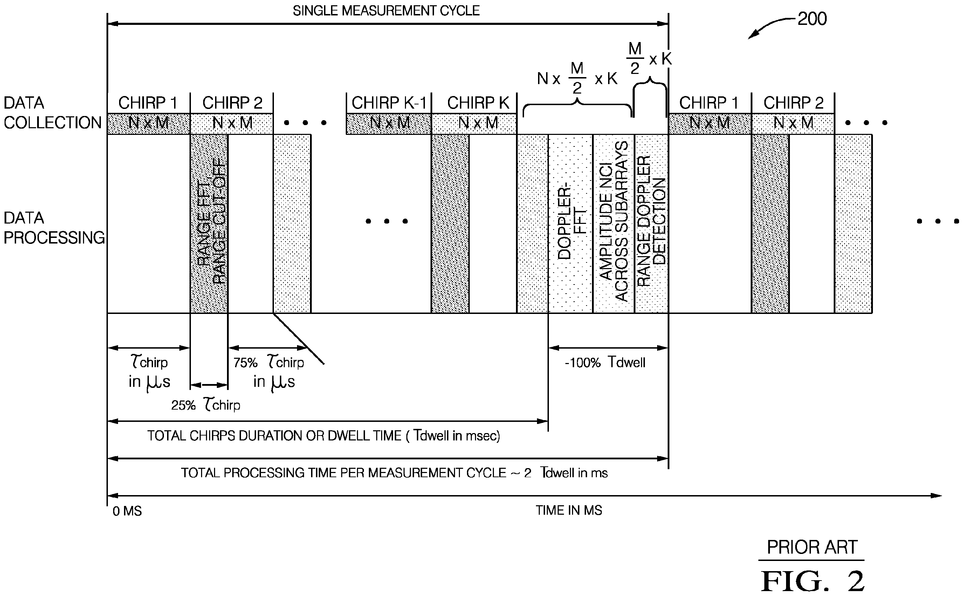

Fig. 2 illustrates a timing diagram 200 for previously defined radars systems such as that shown in United States Patent 7,639,171 issued to Alland et al. on December 29, 2009. This prior system performed a first Fourier transformation of data received from various subarrays arising from one pulse (e.g. the first pulse 16A) while a subsequent pulse (e.g. the second pulse 16B) was being transmitted and data was gathered arising from the subsequent pulse. This first Fourier transformation of received data is commonly called a ranging fast Fourier Transform or RANGE FFT. Considering a specific configuration of the pulse-time duration ($\tau$chirp), number of pulses (K), number of samples per receive antenna-array element per pulse (M), number of receive antenna-array elements (N), and selected signal processing device speed, performing the RANGE FFT in the prior system for example took about 25% of the time it took to transmit a pulse and capture the time-domain data arising therefrom ($\tau$chirp). As such, the controller 30 was partially idle during 75 % of the time it took to transmit one of the pulses that made up the series of pulses. Once data from all of the pulses had been received and processed through the RANGE FFT, further data processing that includes a DOPPLER FFT, AMPLITUDE NON-COHERENT-INTEGRATION (NCI), and RANGE-DOPPLER DETECTION was performed. The time necessary to perform this further data processing is comparable to, i.e. about equal to, the time necessary to transmit all of the pulses.

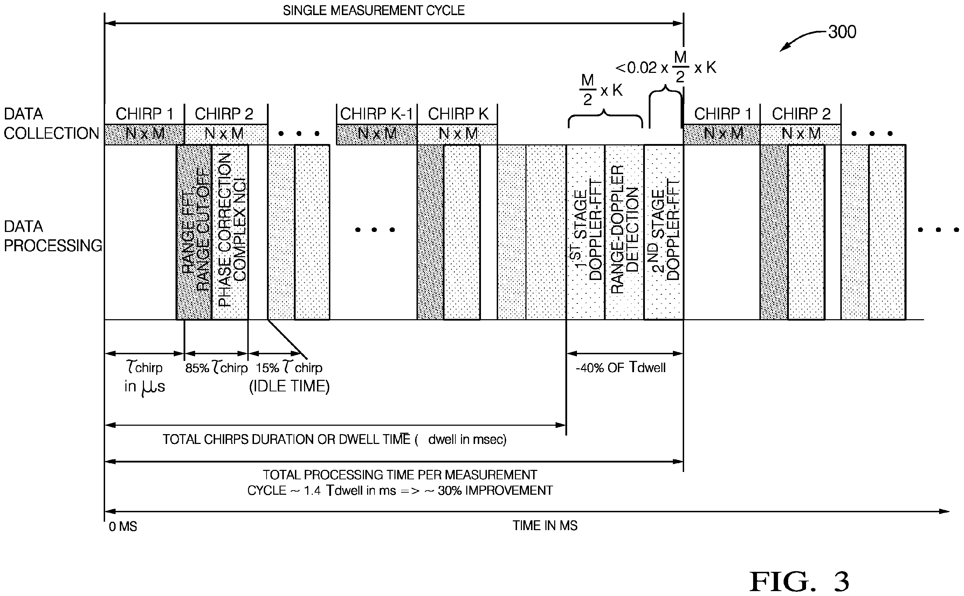

Fig. 3 shows a timing diagram 300 for the system 10 described herein that is an improved way to process data so that additional data processing is done immediately following the RANGE FFT. The improvement increases time efficiency of signal processing in the controller 30 so that a signal processing device in the controller 30 is partially idle for less than 15 % of the time it takes to transmit one of the pulses (τchirp), instead of the 75% idle time described above for the prior system. That is, additional data processing of data from the first pulse 16A is performed before reception of the reflection of the second pulse 16B is finished. As a result, the further data processing to determine Doppler and Range-Doppler information takes about 40% of the time needed by the prior system. By way of further explanation, if the duration of a single measurement cycle by the prior system was characterized by one dwell interval necessary to transmit all of the pulses plus about one dwell interval for additional signal processing, the single measurement cycle takes about 2.0 dwell intervals (Tdwell). By contrast, the improved system described herein (the system 10) takes the same one dwell interval to transmit all of the pulses, but only about 0.4 dwell intervals to post process data, so a single measurement cycle in the improved system described herein takes 1.4 dwell intervals (Tdwell). Such a time efficiency improvement due to absolute parallel processing enhancement between sample-data accumulation (or collection) and execution is advantageous as the range 18, the rate of change of the range 18, and the angle 22 to various objects can be more frequently and accurately determined using similar signal processing hardware. Note that the percentual relationship between processing time and pulse-time duration (i.e. to transmit a pulse and capture the time-domain data) is valid only for a specific configuration of the pulse-time duration, number of pulses, number of samples per pulse and per receive antenna element, number of receive antenna-array elements, and signal processing device speed. This is only an example to simplify the illustration, and it is recognized that a different configuration of these parameters could lead to a different percentual relationship between processing time and pulse-time duration as well as dwell time.

Referring again to Fig. 1, as will be described in more detail below, the improvement in performance, which is measured by the decrease in time of the single measurement cycle, is realized because the controller 30 is operable to calculate, before reception of the reflection of the second pulse 16B is finished, a first transformation 34 of the first signal 28A and the second signal 28B (and/or a subarray that combines one or both signals with signals from other antenna). The first transformation 34 determines range-data 36 based on the reflection of the first pulse 16A. The range-data 36 includes a phase-component RP and an amplitude-component RA. The controller 30 is further configured so the first transformation 34 is followed by a step that calculates or performs a complex non-coherent integration 38 of the phase-component RP and the amplitude-component RA to determine the averaged-range-data 40 that includes a Doppler-phase DP and a Doppler-amplitude DA.

The system 10, or in particular the controller 30, may be further operable to normalize the phase-component via a NORMALIZE PHASE 42 prior to calculating the complex non-coherent integration 38 of the phase-component RP and the amplitude-component RA. Performing phase correction across receive antenna-array elements or subarrays removes or compensates for the relative phase difference between each of the plurality of antennas 26 caused by physical separation of the plurality of antennas 26 and the angle 22 to the object 20, while retaining the Doppler phase term DP.

The system 10, or in particular the controller 30, may be further operable to calculate, after the series of pulses 16 is transmitted, a first-stage-Doppler-FFT 44 (DOPPLER FFT #1 44), followed by a range-Doppler-detection 46, followed by a second-stage-Doppler-FFT 48 (DOPPLER FFT #2 48), as will be described in more detail below.

As suggested above, the system 10 described herein uses an improved signal processing algorithm to improve measurement processing time (or update rate) of a single measurement cycle, see Fig. 3. The improvement allows for better use of process idle time during pulses (e.g. the second pulse 16B, the third pulse 16C ...) of the series of pulses 16 for performing the complex non-coherent integration 38 (COMPLEX NCI 38) (i.e. sums the real and imaginary) of the range frequency spectrums (RANGE FFT) across the plurality of antennas 26 and/or subarrays derived therefrom. The improvement replaces the amplitude based NCI post-process algorithm block used by prior systems without compromising radar detection performance, and saves processing time that was otherwise required to perform the amplitude based NCI algorithm. The improvement also reduces processing time requirement for the Doppler frequency transformation (DOPPLER FFT #1 44, DOPPLER FFT #2 48) as it now has to process only the complex NCI output of the range spectrums or averaged-range-data for all successive chirps instead of processing range spectrums for all successive chirps and for all of the plurality of antennas 26. As a result, the system 10 realized about 30% overall measurement update rate improvement with equivalent detection performance of the prior signal processing. The per measurement cycle accuracy or performance equivalency between the two signal processing procedures is realized by applying the COMPLEX NCI 38 (i.e. sums the real and imaginary) of the range spectrums across the plurality of antennas 26 after subtracting out their relative phase differences (NORMALIZE PHASE 42).

As shown in Fig. 1, the system 10 determines the relative location of the object 20 by radiating successive RF-chirp signals (the series of pulses 16) of a voltage controlled oscillator 50 (VCO 50) through a transmit antenna 52, and detecting or receiving the reflected-signal 24 from object 20 in the form of reflected chirp signals by the plurality of antennas 26., which are connected to an analog-to-digital converter 54 (A/D 54) via the switch matrix 32 and a homodyne down converter mixer 56, which may include a low noise amplifier and a baseband filter, as will be recognized by those in the art. The time delay between transmitted and received chirp signals as well as the frequency shift between received successive chirp signals due to the Doppler effect are used to compute the range 18 and relative velocity of the object 20 relative to the plurality of antennas 26. The relative phase differences between signals 28A, 28B, 28C from antennas 26A, 26B, 26C are used to estimate the angle 22 of the object 20 by applying various angle finding techniques such as monopulse, digital-beamforming, or super-resolution.

The N and M associated with each chirp in Figs. 2 and 3 represent total number of receive antenna-array elements and total number of samples per receive antenna element per chirp, respectively. The first transformation 34 performs range frequency transformation (i.e. RANGE FFT) on a temporary buffer of stored time domain data and stores only range spectrums (i.e. N-by-MM) in the radar memory that are relevant for the application, while simultaneously accumulating from the A/D 54 sampled time-domain data of the second chirp in a secondary temporary buffer. That is, it is assumed for the application where the system 10 is used that the relevant range spectrums size is MM = M/2. By switching between the first and second temporary buffers, this process continuous until the complete time domain samples of all K chirps have been transformed in to the range frequency domain and stored. The total range spectrums data size accumulated in the radar memory will be equal to N-by-MM-by-K.

The prior system (Fig. 2) performs Doppler frequency transformation (DOPPLER-FFT) on in the accumulated range spectrums, and integrates Range-Doppler (RD) amplitude spectrums across receive antenna-array elements non-coherently. The amplitude based Non-Coherent Integration (NCI) improves the Signal-to-Noise Ratio (SNR) by suppressing systems noise variance much significantly than signal loss due to for example gain mismatch across antenna-array elements or multipath effects. The resultant NCI RD-spectrums (or RD-image) are used to estimate detection threshold, and local maxima of spectrums indicate detectable objects for local maxima those are greater than the estimated detection threshold. The local maxima and their immediate adjacent neighboring amplitude spectrums are used and processed to determine accurate RD-coordinates of the detections. The lateral and longitudinal positions of the detections are to determine by applying the desired angle finding algorithm (i.e. Digital Beamforming and/or Super-resolution) on the detections beam-vectors. Beam-vectors are raw complex RD-spectrums of receive antenna-array elements.

Fig. 2 shows an approximated signal processing time line for the above described prior system signal processing flow for a signal processing unit with 300 MHz clock-speed, a chirp-time duration ($\tau$chirp) of 25 microseconds , 4 receive antenna-array elements, and 256 samples per receive antenna-array elements per chirp. It indicates that this kind of signal processing flow (or procedure) introduces significant processing idle time during range spectrum data collection of the time-domain sample data of a chirp. For this approximation, range frequency transformation (Range-FFT) consumes only about 25% of the chirp duration and the remaining 75 % of chirp duration is process free or idle. In addition, the subsequent Doppler frequency transformation (Doppler-FFT) and amplitude based NCI processing blocks consume significant amount of processing time as they have to process all the stored range frequency spectrums of data size N-by-MM-by-K. It is almost equivalent to a total time length for all chirps (known as a dwell time or Tdwell). This implies that, regardless of the performance or clock-speed of a signal processing device in the controller 30, the prior signal processing flow would benefit from a processing time reduction or measurement update-rate improvement due to absolute (or efficient) parallel processing between sample-data accumulation (or collection) and execution.

The improvement provided by the system 10 described herein is realized with a new signal processing flow technique and associated algorithm modification improves measurement processing time, i.e. increases the update rate. As shown by the improved signal process timing in Fig. 3, the system 10 uses the process idle time during time domain sample data accumulation of a chirp to perform the COMPLEX NCI 38 (i.e. sums the real and imaginary) of the range frequency spectrums across receive antenna-array elements (the plurality of antennas 26).

The improvement is to substitute the amplitude NCI algorithm block in prior signal process timing (Fig. 2) with equivalent RD-detection performance, and save processing time that was otherwise required for processing amplitude NCI. The improved process also reduces processing time requirement for the Doppler frequency transformation (Doppler-FFT) by a factor of N as it has to process only the complex NCI output of data size MM-by-K in the 1st stage Doppler-FFT block (DOPPLER FFT #1 44). Note that the Doppler-FFT in the prior signal process flow should process a range spectrum size of N-by-MM-by-K.

As the processing time line in Fig. 3 shows, the total processing time length has reduced by about 30% to execute the complete signal processing starting from A/D sample data to receiving to 2nd stage Doppler-FFT (DOPPLER FFT #2 48) output. Note that the 2nd stage Doppler-FFT is required to retrieve beam-vectors only for the detections recognized by the Range-Doppler detection block. It performs Doppler-FFT using the raw range frequency (or Range-FFT) spectrums of detections for all receive antenna-array elements but only at the detections range and Doppler frequency bins. Note also that the raw range frequency (or Range-FFT) spectrums of all receive antenna-array elements are stored in the radar memory (or SRAM) for all chirps. In the prior system, the maximum number of detections per measurement cycle is about 128. As such, the 2nd stage Doppler-FFT (DOPPLER FFT #2) requires significantly less processing time than the 1st stage Doppler-FFT processing time as the 2nd stage Doppler-FFT has to perform an FFT for all receive antenna-array elements but only at 128 detection points. That means, the 2nd stage Doppler-FFT will process a maximum data of N x 128, which accounts for less than 2 % of the 1st stage Doppler-FFT data size, so less processing time. The 2nd stage FFT output beam-vectors are used by the angle finding algorithm (i.e. Digital beamforming and/or Super-resolution techniques) to estimate angular position of detections.

As the following equations illustrate, the RD-detection performance equivalency is achieved by the COMPLEX NCI 38 (i.e. sums the real and imaginary) of the range spectrum across antenna-array elements after correcting for their relative phase differences due to the Uniform Linear Array (ULA) configuration. Using Eq. 1 as an example to express the far-field model of linear Frequency Modulated Continues Waveform (FMCW) using ULA-configuration with L maximum receive antenna-array elements:

$$c_l(t,\theta) = g_l(\theta)e^{-ikx_l \cos\theta} s(t) \qquad \text{(Eq. 1)},$$

where $l$ is the ULA-element index (or receive antenna-array element) that runs from 1 to L=12; $c_l(t,\theta)$ is the baseband signal measured at ULA- element $l$ for scattering center located at azimuthal angle $\theta$, referenced from the ULA alignment axis; and $g_l(\theta)$ is directivity of the ULA- element 1 that is located at $x_l$ from center of the ULA. Then $k = \dfrac{2\pi}{\lambda}$ is magnitude of the propagation vector (or wave number); and $\lambda = \dfrac{c}{f_0}$ is operating wave length with c and $f_0$ for the speed of light (e.g. 300,000,000 m/s) and the carrier frequency (e.g. 76.5 GHz), respectively. $s(t) = Ae^{i2\pi\left(f_0 \tau_l - \frac{1}{2}\alpha\tau_l^2 + \alpha\tau_l t\right)}$ is baseband signal, where A is amplitude, which is a function of transmitted power, Radar-Cross-Section of the scattering center, propagation path, and propagation loss; $\alpha$ is FMCW chirp slop $= \dfrac{sweep\ frequency}{modulation\ time\ (or\ chirp\ duration)}$; and $\tau_l = \dfrac{r}{c}$ is wave propagation time from transmit to scattering center and back to the $l^{th}$ antenna array element (or ULA-element $l$) with r for the associated wave propagation path length (or radial range). If the target is moving, $r(t) = r_0 + vt$ where $r_0$ is radial range of target at time t = 0, and $v$ is radial velocity of the target.

The far-field model Eq. 1 includes a phase term $kx_l \cos\theta$, which varies between receive antenna-array elements as a result of the wave propagation path length difference due to the ULA-configuration. Superposition of signals obtained from Eq. 1 across the plurality of antennas 26 will form a beam pattern that can be expressed by the $\sin(\theta/\theta)$, commonly known as the sinc-function. Signals overlap constructively and destructively at the propagation path length differences equivalent to the multiple of full and half wavelengths (i. e. $\lambda$ and $\dfrac{\lambda}{2}$), respectively. As result, the beam pattern possesses periodical maxima and minima with the first maxima at target angular position and first minima (or null) at angle that is a function of the ULA-aperture width, which is, for example: $\theta = 90\ deg - acos\left(\dfrac{\lambda}{(L-1)x}\right) \approx 3.4\ deg$, where $x \approx 6.3\ mm$, L = 12, and $\lambda$ = 3.92 mm are for spacing between two adjacent ULA-elements, for a total number of ULA-elements, and for an operating wavelength, respectively. The first maximum represents signal reflected from scattering center while subsequent maxima are defined as monotonically decreasing side-lobes with the first one about at 13 dB below the first maximum. Digital Beamforming technique is using this signal Superposition concept for estimating angular position of a scattering center; see United States Patent 7,474,262 issued to Alland on January 6, 2009.

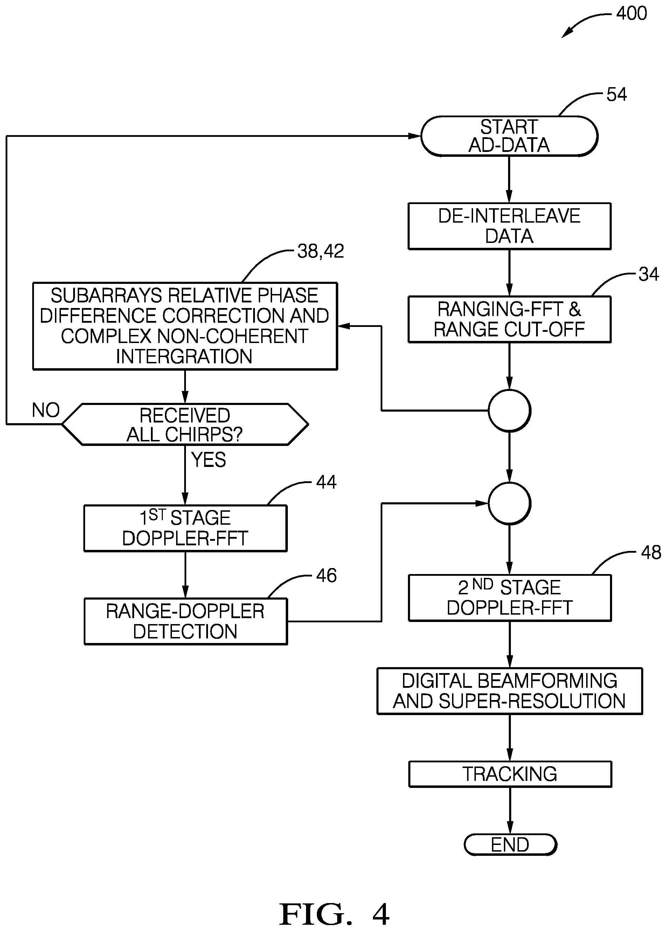

Fig. 4 illustrates a non-limiting example of a method 400 performed by the system 10 to perform complex averaging (i.e. sums the real and imaginary) of the range spectrum across the plurality of antennas 26, with the various steps labeled with reference numbers that correspond to those used in Fig. 1. This replicates signals superposition at the center of the ULA (or $\theta$ = 0). That means, it will introduce a signal loss for scattering center located at angular position different from zero (i.e. $\theta \neq 0$). To address the signal loss issue due to complex averaging, the system 10 described herein subtracts out the relative phase difference between the ULA-elements before performing complex averaging across the ULA-elements. This can be done by modifying Eq. 1 as follows:

$$c_l(t,\theta) = g_l(\theta)e^{-ikx_l \cos\theta} s(t)\ e^{ik(x_l - x_{ref})\cos\theta} \qquad \text{(Eq. 2)},$$

where $x_{ref}$ is location for any one of the ULA-elements that is selected as reference receive antenna-array element of the configuration.

Now, performing a complex averaging of Eq. 2 across receive antenna-array elements is equivalent to the amplitude based Non-Coherent-Integration (NCI) as it also doesn't include the phase information with respect to the ULA-elements. That means instantaneous complex vectors of all receive antenna-array elements lay on the same line on the complex plane. Note that the complex averaging is though required to retain Doppler phase term of the signal for a latter use in the Doppler frequency transformation (or Doppler-FFT) process. As a result, the complex averaging of Eq. 2 across the receive antenna-array elements can be defined here as complex NCI with respect to the ULA-configuration. It follows the single receive antenna-array element pattern analogues to amplitude NCI and confirms that both complex and amplitude NCI obtains equivalent signal pattern versus angular position of the scattering center. The signal patterns follow the single receive antenna-array element pattern and converge to zero at scattering center's

angular position: $\theta = 90\ deg - acos\left(\frac{\lambda}{x}\right) \approx 38\ deg,$ for the example given above with $x \approx 6,3\ mm$, L = 12, and $\lambda = 3.92$ mm.

Note that, before applying the subtraction of relative phase differences of the ULA-elements on the range spectrum and executing the complex NCI, it is required to store the raw range spectrums data in the radar memory (or SRAM) for later use in the post-processing. The post-processing block 2$^{nd}$ stage Doppler-frequency transformation (DOPPLER FFT #2) has to retrieve and use these raw range spectrums (i.e. with including relative phase differences of ULA-elements) for in the RD-Detection process estimated detections only, and it generates detection's beam-vector data. Detection's beam-vector data are required input to the angle finding block (or Digital Beamforming & Super-resolution algorithms) of the signal processing flow.

While Fig. 4 shows a non-limiting example of the signal processing flow of the system 10, it is also contemplated that the various steps after the complex NCI 38 can be processed in a different order that further improves processing time and radar memory (or SRAM) size. By way of example and not limitation, the step range-Doppler-detection 46 can be renamed as range-Detection to be processed just after the complex NCI 38 in the remaining process idle time during chirp time domain sample data accumulation. For a chirp or pulse signal with adequate Signal-to-Noise ratio, range-detection performs detection using the amplitude spectral profile of the averaged-range-data 40 to substitute the processing block range-Doppler-detection 46 and further improve processing time (i.e. increases the update rate).

After the series of chirps or pulses is transmitted, the range-detection can be followed by performing single stage Doppler-FFT (for example 48) and Digital-beamforming to estimate the rate of change of range 18 and direction or angle 22 of the object 20. Since the single stage Doppler FFT and Digital-beamfoming are to perform on the raw range frequency (or Range-FFT) spectrums of the detections estimated by the range-detection process, the processing time can be further reduced by the amount of processing time required for the 1$^{st}$ stage Doppler FFT (DOPPLER FFT #1 44). Furthermore, the required radar memory (or SRAM) size reduces accordingly as system 10 has not to store the raw range frequency (or Range-FFT) spectrums for all relevant range bins (MM) and all plurality of antennas 26 (N) and all chirps (K). Instead, system 10 stores raw range frequency spectrums only for a maximum of 128 detections for all plurality of antennas 26 (N) and all chirps (K).

Further reduction of processing time and radar memory size still possible if the digital-beamfoming block can be processed in the process idle time following the range -detection process. In general, the realization of these alternative processing step orders of the signal processing flow shown in Fig. 4 is highly dependent on adequate Signal-to-Noise ratio of a single chirp or pulse. Accordingly, in this paragraph claimed additional processing time and memory size improvement are limited by capability of the system 10 to provide adequate Signal-to-Noise ratio of a chirp or pulse.

Accordingly, a system 10, a controller 30 for the system 10, and a method 400 of operating the system 10 is provided. The improved signal processing flow decreases measurement processing time (i.e. increases the update rate). It makes better use of process idle time during chirp time domain sample data accumulation for performing complex NCI of the range frequency spectrums across receive antenna-array elements. This helps to eliminate the amplitude based NCI algorithm block from the prior signal processing flow described in United States Patent 7,639,171 issued to Alland et al. on December 29, 2009 without compromising the radar detection performance, and it saves processing time that was otherwise required to perform the amplitude NCI. It also reduces processing time requirement for the Doppler frequency transformation (Doppler-FFT) as it has now only to process the complex NCI output of the range spectrum.

While this invention has been described in terms of the preferred embodiments thereof, it is not intended to be so limited, but rather only to the extent set forth in the claims that follow.

**Claims**

**1.** A radar system (10) comprising:

a transmitter (12) operable to transmit a radar-signal (14) **characterized by** a series of pulses (16), wherein the radar-signal (14) includes a first pulse (16A) and a second pulse (16B);
a plurality of antennas (26) operable to detect a reflected-signal (24) indicative of a reflection of the radar-signal (14) by an object (20), said plurality of antennas (26) includes a first antenna (26A) operable to output a first signal (28A) and a second antenna (26B) operable to output a second signal (28B); and a controller (30) operable to

receive the first signal (28A) and the second signal (28B) during reception of the reflection of the first pulse (16A), and

calculate, before reception of the reflection of the second pulse (16B) is finished, a first transformation (34) of the first signal (28A) and the second signal (28B) to determine range-data (36) based on the reflection of the first pulse (16A), wherein the range-data (36) includes a phase-component and an amplitude-component,

**characterized in that** said first transformation (34) is followed by calculating a complex non-coherent integration (38) of the phase-component and the amplitude-component to determine averaged-range-data (40) that includes a Doppler-phase and a Doppler-amplitude, before reception of the reflection of the second pulse (16B) is finished.

2. The system (10) in accordance with claim 1, wherein the controller (30) is further operable to normalize the phase-component prior to calculating the complex non-coherent integration (38) of the phase-component and the amplitude-component.

3. The system (10) in accordance with claim 1 or 2, wherein the controller (30) is further operable to calculate, after the series of pulses (16) is transmitted, a first-stage-Doppler-FFT (44).

4. The system (10) in accordance with claim 3, wherein the controller (30) is further operable to calculate, after the first-stage-Doppler-FFT (44) is calculated, a range-Doppler-detection (46).

5. The system (10) in accordance with claim 4, wherein the controller (30) is further operable to calculate, after the range-Doppler-detection (46) is calculated, a second-stage-Doppler-FFT (48).

**Patentansprüche**

1. Radarsystem (10), das aufweist:

einen Sender (12), der betriebsfähig ist zum Senden eines Radarsignals (14), das durch eine Serie von Pulsen (16) gekennzeichnet ist, wobei das Radar-signal (14) einen ersten Puls (16A) und einen zweiten Puls (16B) umfasst;

eine Vielzahl von Antennen (26), die betriebsfähig sind zum Erfassen eines reflektierten Signals (24), das eine Reflexion des Radarsignals (14) durch ein Objekt (20) angibt, wobei die Vielzahl von Antennen (26) eine erste Antenne (26A) umfasst, die betriebsfähig ist zum Ausgeben eines ersten Signals (28A), und eine zweite Antenne (26B), die betriebsfähig ist zum Ausgeben eines zweiten Signals (28B); und

eine Steuervorrichtung (30), die betriebsfähig ist zum Empfangen des ersten Signals (28A) und des zweiten Signals (28B) während des Empfangs der Reflexion des ersten Pulses (16A), und

Berechnen, bevor ein Empfang der Reflexion des zweiten Pulses (16B) beendet ist, einer ersten Transformation (34) des ersten Signals (28A) und des zweiten Signals (28B), um Bereichsdaten (36) basierend auf der Reflexion des ersten Pulses (16A) zu bestimmen, wobei die Bereichsdaten (36) eine Phasenkomponente und eine Amplitudenkomponente umfassen,

**dadurch gekennzeichnet, dass** auf die erste Transformation (34) ein Berechnen einer komplexen nichtkohärenten Integration (38) der Phasenkomponente und der Amplitudenkomponente folgt, um gemittelte Bereichsdaten (40) zu bestimmen, die eine Doppler-Phase und eine Doppler-Amplitude umfassen, bevor ein Empfang der Reflexion des zweiten Pulses (16B) beendet ist.

2. Das System (10) gemäß Anspruch 1, wobei die Steuervorrichtung (30) weiter betriebsfähig ist zum Normalisieren der Phasenkomponente vor dem Berechnen der komplexen nichtkohärenten Integration (38) der Phasenkomponente und der Amplitudenkomponente.

3. Das System (10) gemäß Anspruch 1 oder 2, wobei die Steuervorrichtung (30) weiter betriebsfähig ist zum Berechnen einer erste-Stufe-Doppler-FFT (44), nachdem die Serie von Pulsen (16) gesendet ist.

4. Das System (10) gemäß Anspruch 3, wobei die Steuervorrichtung (30) weiter betriebsfähig ist zum Berechnen einer Bereichs-Doppler-Erfassung (46), nachdem die erste-Stufe-Doppler-FFT (44) berechnet ist.

**5.** Das System (10) gemäß Anspruch 4, wobei die Steuervorrichtung (30) weiter betriebsfähig ist zum Berechnen einer zweite-Stufe-Doppler-FFT (48), nachdem die Bereichs-Doppler-Erfassung (46) berechnet ist.

**Revendications**

**1.** Système radar (10) comprenant :

un émetteur (12) dont la fonction est d'émettre un signal radar (14) **caractérisé par** une série d'impulsions (16), dans lequel le signal radar (14) inclut une première impulsion (16A) et une seconde impulsion (16B) ; une pluralité d'antennes (26) dont la fonction est de détecter un signal réfléchi (24) indicatif d'une réflexion du signal radar (14) par un objet (20), ladite pluralité d'antennes (26) incluant une première antenne (26A) dont la fonction est de délivrer un premier signal (28A) et une seconde antenne (26B) dont la fonction est de délivrer un second signal (28B) ; et un contrôleur (30), dont la fonction est :

de recevoir le premier signal (28A) et le second signal (28B) pendant la réception de la réflexion de la première impulsion (16A), et de calculer, avant que la réception de la réflexion de la seconde impulsion (16B) soit finie, une première transformation (34) du premier signal (28A) et du second signal (28B) pour déterminer des données de gamme (36) basées sur la réflexion de la première impulsion (16A), dans lequel les données de gamme (36) incluent une composante de phase et une composante d'amplitude, **caractérisé en ce que** ladite première transformation (34) est suivie par le calcul d'une intégration complexe non cohérente (38) de la composante de phase et de la composante d'amplitude pour déterminer des données de gamme moyennées (40) qui incluent une phase Doppler et une amplitude Doppler, avant que la réception de la réflexion de la seconde impulsion (16B) soit finie.

**2.** Système (10) selon la revendication 1, dans lequel le contrôleur (30) en outre pour fonction de normaliser la composante de phase avant de calculer l'intégration complexe non cohérente (38) de la composante de phase et de la composante d'amplitude.

**3.** Système (10) selon la revendication 1 ou 2, dans lequel le contrôleur (30) a en outre pour fonction de calculer, après que la série d'impulsions (16) a été transmise, une FFT ("transformation rapide de Fourier") Doppler de premier étage (44).

**4.** Système (10) selon la revendication 3, dans lequel le contrôleur (30) en outre pour fonction de calculer, après avoir calculé la FFT Doppler de premier étage (44), une détection Doppler de distance (46).

**5.** Système (10) selon la revendication 4, dans lequel le contrôleur (30) a en outre pour fonction de calculer, après avoir calculé la détection Doppler de distance (46), une FFT Doppler de second étage (48).

FIG. 1

SINGLE MEASUREMENT CYCLE

200

$N \times \dfrac{M}{2} \times K$

$\dfrac{M}{2} \times K$

DATA COLLECTION

| CHIRP 1 | CHIRP 2 | • • • | CHIRP K-1 | CHIRP K | | CHIRP 1 | CHIRP 2 | • • • |
| N x M | N x M | | N x M | N x M | | N x M | N x M | |

DATA PROCESSING

RANGE FFT, RANGE CUT OFF

• • •

DOPPLER-FFT

AMPLITUDE NCI ACROSS SUBARRAYS

RANGE DOPPLER DETECTION

$\tau$chirp in μs

75% $\tau$chirp in μs

25% $\tau$chirp

-100% Tdwell

TOTAL CHIRPS DURATION OR DWELL TIME ( Tdwell in msec)

TOTAL PROCESSING TIME PER MEASUREMENT CYCLE ~ 2 Tdwell in ms

0 MS

TIME IN MS

PRIOR ART

FIG. 2

EP 3 109 662 B1

EP 3 109 662 B1

SINGLE MEASUREMENT CYCLE

300

$<0.02 \times \dfrac{M}{2} \times K$

$\dfrac{M}{2} \times K$

DATA COLLECTION

| CHIRP 1 | CHIRP 2 | • • • | CHIRP K-1 | CHIRP K |
|---|---|---|---|---|
| N x M | N x M | | N x M | N x M |

| CHIRP 1 | CHIRP 2 | • • • |
|---|---|---|
| N x M | N x M | |

DATA PROCESSING

RANGE FFT, RANGE CUT-OFF

PHASE CORRECTION COMPLEX NCI

• • •

1ST STAGE DOPPLER-FFT

RANGE-DOPPLER DETECTION

2ND STAGE DOPPLER-FFT

• • •

$\tau$chirp in μs

85% $\tau$chirp

15% $\tau$chirp (IDLE TIME)

-40% OF Tdwell

TOTAL CHIRPS DURATION OR DWELL TIME ( dwell in msec)

TOTAL PROCESSING TIME PER MEASUREMENT CYCLE ~ 1.4 Tdwell in ms => ~ 30% IMPROVEMENT

0 MS

TIME IN MS

FIG. 3

400

START
AD-DATA — 54

DE-INTERLEAVE
DATA

RANGING-FFT &
RANGE CUT-OFF — 34

SUBARRAYS RELATIVE PHASE
DIFFERENCE CORRECTION AND
COMPLEX NON-COHERENT
INTERGRATION — 38,42

NO — RECEIVED
ALL CHIRPS?

YES

1ST STAGE
DOPPLER-FFT — 44

RANGE-DOPPLER
DETECTION — 46

2ND STAGE
DOPPLER-FFT — 48

DIGITAL BEAMFORMING
AND SUPER-RESOLUTION

TRACKING

END

FIG. 4

**EP 3 109 662 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7639171 B, Alland
- US 7474262 B, Alland